# EUROPEAN PATENT SPECIFICATION

(11) **EP 2 157 891 B1**
(45) Date of publication and mention of the grant of the patent: **02.07.2014**
(21) Application number: 08757265.7
(22) Date of filing: 17.06.2008
(51) Int. Cl.: A47J 27/62, A47J 45/06, G01K 5/62, A47J 27/08

(54) **APPARATUS FOR DISPLAYING OPERATING STATES OF A COOKING VESSEL**
VORRICHTUNG ZUR ANZEIGE VON BETRIEBSZUSTÄNDEN EINES GARBEHÄLTERS
DISPOSITIF DESTINÉ À L'AFFICHAGE D'ÉTATS DE FONCTIONNEMENT D'UN PLAT DE CUISSON

(30) Priority: 19.06.2007 EP 07110530
(43) Date of publication of application: 03.03.2010
(73) Proprietor: AMC International Alfa Metalcraft Corporation AG, 6343 Rotkreuz (CH)
(72) Inventor: BECK, Hans-Jürgen, CH-6014 Littau (CH)
(74) Representative: Liebetanz, Michael
(86) International application number: PCT/CH2008/000272
(87) International publication number: WO 2008/154763

(56) References cited:
- EP-A- 0 921 383
- WO-A-96/31739
- DE-A1- 19 602 826
- DE-U1- 9 211 060

## Description

### Technical field of the invention

The present invention relates to an apparatus for displaying operating states of a cooking vessel in accordance with the features of the preamble of Claim 1.

### Prior art

Apparatuses for displaying operating states of a cooking vessel have been known for a long time.

For example EP 0 364 684 shows such an apparatus. This apparatus can be used to monitor the temperature and pressure of a cooking vessel. In this case, the lid of the cooking vessel is provided with an appropriate measuring device. The user can then read off the operating state on a display device. The measurement is performed via a pointer which can be detected by means of a light barrier. In this case, the light barrier can be set to the position of the display which is to be monitored, and then recognizes the pointer when the latter is located in the appropriate position. Thus, it is possible to monitor and/or display only a single operating state, that is to say a specific temperature, for example. Furthermore, the apparatus is incapable of recognizing the variation in the operating state over a specific period; it is thus impossible, for example, to recognize errors in the control of the cooker.

DE 196 02 826 A1 discloses a similar apparatus.

### Summary of the invention

Starting from this prior art it is the object of the invention to specify an operating state display apparatus which is capable of continuously displaying a prevailing operating state.

Furthermore, the present operating state display apparatus is to recognize error states in the control of the cooker.

This object is achieved by an apparatus having the features of Patent Claim 1. Advantageous embodiments of the invention are specified in the dependent claims.

The inventive apparatus is particularly advantageous, because many different operating states can be monitored and displayed on the basis of the coded structure. This means that the operating state measured at a specific or desired instant can be determined and displayed or monitored by the apparatus.

In a preferred embodiment the apparatus can be combined with a lid of a cooking vessel, the adjusting element projecting into the lid space through an opening in the lid.

Further advantageous embodiments are characterized in the dependent claims.

### Brief description of the drawings

The invention is described in more detail below with the aid of the drawings, in which:
- Figure 1: shows a view of a lid of a cooking vessel with an inventive operating state display apparatus according to a first exemplary embodiment;
- Figure 2: shows a sectional view of a lid according to Figure 1;
- Figure 3: shows a view of a lid of a cooking vessel with an inventive operating state display apparatus according to a second exemplary embodiment;
- Figure 4: shows a sectional view of a lid according to Figure 3;
- Figure 5: shows a schematic view of a setting disc and a measuring disc in a first position of an operating state display apparatus in accordance with the present invention;
- Figure 6: shows a schematic view of a setting disc and a measuring disc in a second position according to Figure 5; and
- Figure 7: shows a schematic view of an inventive display disc of an operating state display apparatus.

### Description of an exemplary embodiment

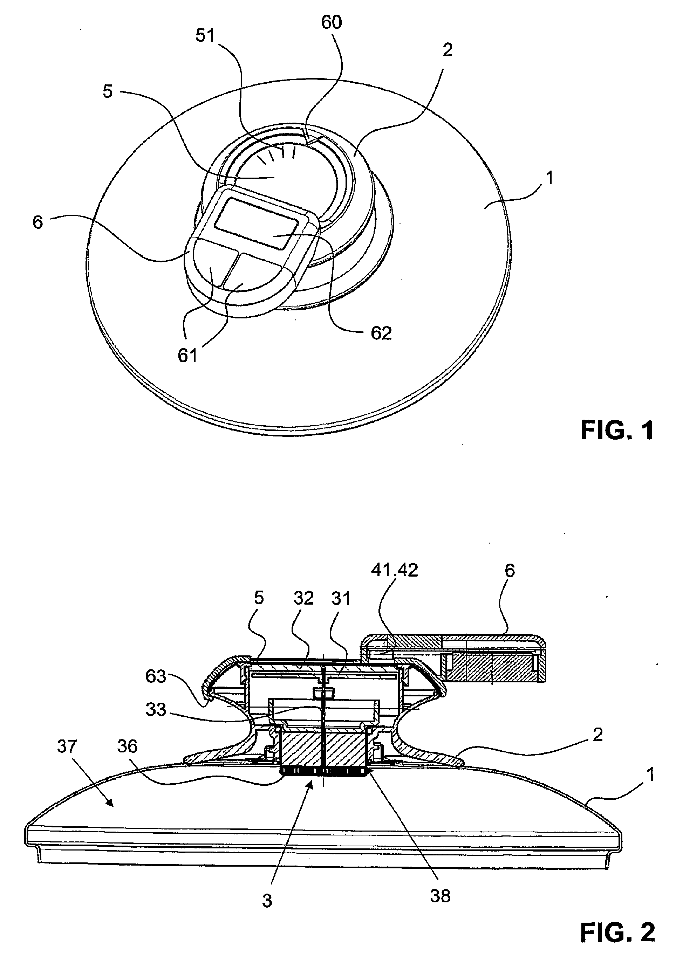

Figure 1 shows a view of a lid 1 of a cooking vessel such as, for example, a pan or a pressure cooker, with a lid handle 2 and an input device 6 according to a first exemplary embodiment. An inventive apparatus for displaying operating states in the cooking vessel, also termed operating state display apparatus, is integrated in the lid handle 2.

Figure 2 shows a sectional illustration of the first exemplary embodiment. An inventive operating state display apparatus according to the first exemplary embodiment substantially comprises at least one measuring device 3, a sensor device 4, a display 5 and an input device 6.

The measuring device 3 comprises a measuring disc 31 and a setting disc 32, both of which are preferably of circular configuration and are arranged concentrically with one another. Here, the setting disc 32 is arranged in a stationary fashion, and the measuring device 31 in a rotatable fashion. The measuring disc 31 can therefore be moved relative to the setting disc 32.

In the present exemplary embodiment, the setting disc 32 is permanently connected to the lid handle 2, and the measuring disc 31 is arranged on a pivotable spindle 33. The measuring disc 31 is arranged in this case below the setting disc 32. A concentric arrangement at the same level or above the setting disc 32 would likewise be conceivable.

The spindle 33 can be pivoted or rotated through a pivoting angle by various adjusting elements according to the measured operating state. Adjusting elements project in this case into the lid space 37 through an opening 38. The operating state serves in this case as an input variable for the pivoting angle of the spindle 33. The spindle 33 is typically pivoted in a pivoting range with an angle from 0° to 180°. Other pivoting ranges, for example smaller ones, are likewise conceivable. The pivoting angle is consequently the representative of the measured operating state.

For temperature measurement, it is preferred to provide a spiral or a coil spring made from bimetal as adjusting element 36 in the lid space 37. Such a spiral or coil spring is particularly well suited for providing an appropriate pivoting angle in accordance with the measured operating state. Such adjusting elements are known from conventional thermometers, and therefore need not be further described here. The fact that an adjusting element is admitted as a planar adjusting element 36 into a corresponding opening 38 in the lid 2, results in the direct and better recording of measured values in the lid space 37.

The opening 38 in the lid 2 is preferably of circular shape and has a diameter from 5 mm to 50 mm. Diameters from 10 mm to 30 mm are particularly preferred, and in this case the lower boundary can also lie between 10 mm and 20 mm.

Instead of an adjusting element 36 for the temperature measurement, the reference numeral can also stand for a cylindrical adjusting element for recording pressure or humidity. The pressure can be measured, for example, by means of a tube spring or a diaphragm. The humidity is preferably detected by means of a mechanical hygrometer.

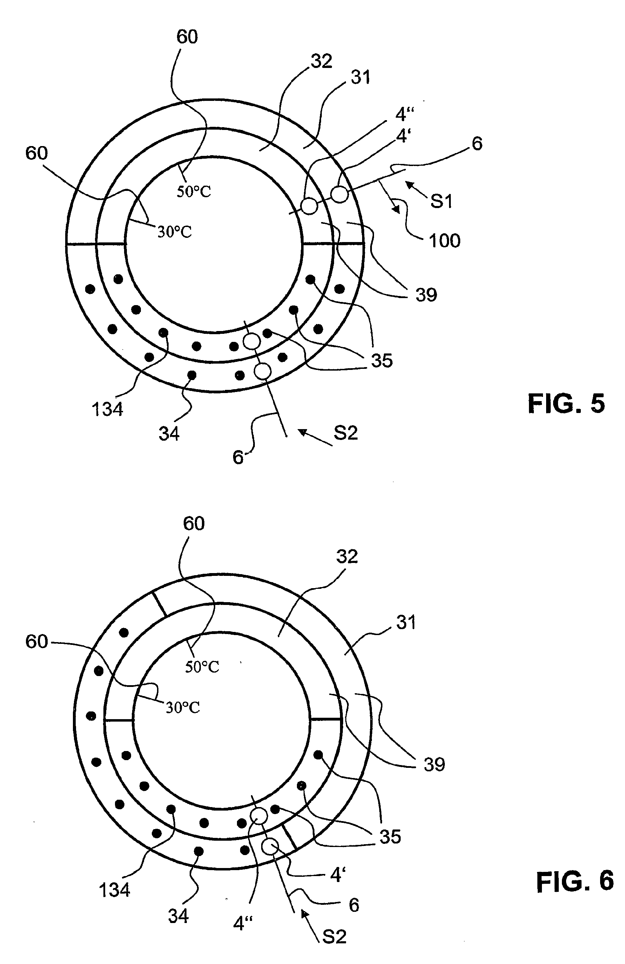

In accordance with Figures 5 and 6, both the surface of the measuring disc 31 and the surface of the setting disc 32 comprise a coded structure 34, 134 which are preferably arranged on different circular rings. The pivoting angle covered by the sensor device 4 can be detected by means of the coded structure 34, 134. The coded structure 34, 134 is arranged here concentrically with the measuring disc 31 and setting disc 32 on the surface thereof. In other words, the coded structure 34, 134 is prescribed on a circular track. On the measuring disc 31, the coded structure 34 extends over the entire pivoting range, it being possible to detect the coded structure 34 with the aid of a sensor device 4', also denoted as measuring sensor 4'. The coded structure 134 preferably likewise extends on the setting disc 32 over a range identical to the pivoting range. The coded structure 134 is monitored with the aid of a sensor device 4", also denoted as setting sensor 4".

If the two discs 31, 32 are arranged one above another and identical measuring methods are used for both discs 31, 32, the circular track of the coded structure 134 of the setting disc 32 has a radius differing from that of the coded structure 34 of the measuring disc 31. The coded structures 34, 134 can lie one above another when different measuring methods are applied which do not influence one another, as will be explained later.

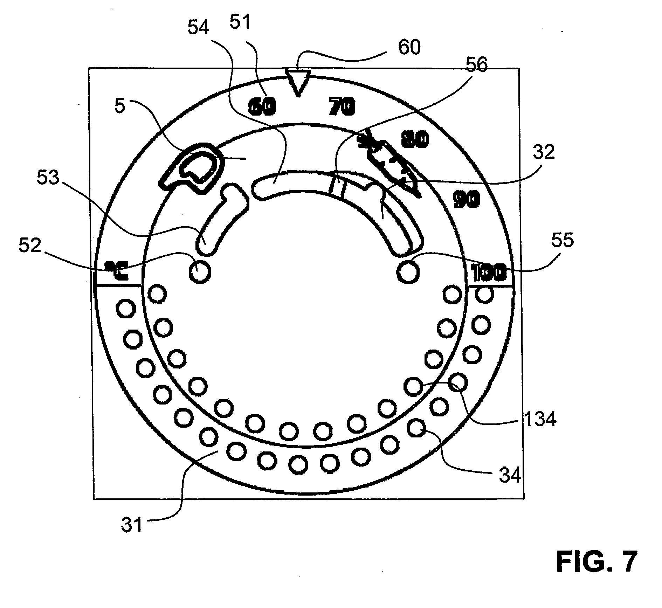

In what follows, a display disc 5 is arranged above the setting disc 32. The display disc 5 comprises a scale 51 which displays the temperature to be set or desired setpoint. In this case, the scale 51 is printed on or embossed in such a way that it can be effectively read off by the user. Figure 7 shows the described scale 51 by way of example. In the other figures, the scale, if visible, is illustrated only schematically. The display disc 5 is provided in this case with temperature setpoint data (for example 50°C, 60°C, 70°C, 80°C, 90°C, 100°C). The display disc 5 can also be integrated directly into the operating state apparatus. That is to say, no separate display disc 5 is present. This arrangement can also be denoted as display device. What is essential is that an element of the measuring disc 31 can be seen by the user through the display disc 5 or past the display disc 5 if it is not intended for the user to read off the operating state at the input device 6. The display disc 5 then has a number of openings 52 - 55 for this purpose. The measuring disc 31 is visible through these openings 52 - 55. A display line 56 which is printed on the measuring disc 31 displays the current operating state to the user through the openings 52 - 55.

The sensor device 4, here the measuring sensor 4' and the setting sensor 4", is able to scan the coded structure 34, 134, and to determine corresponding movements between the sensor device 4 and setting disc 32 or measuring disc 31, and to output a corresponding signal. The signal is preferably an electrical signal; depending on the configuration of the coded structure 34, 134, this is an analogue or a digital signal. The signal is a representative of the path covered by the measuring disc 31 or the path covered via the setting disc 32. Since the path covered by the measuring disc 31 is, in turn, a representative of the operating state, the signal therefore represents the operating state. The path covered by the setting device 6 via the setting disc 32 represents the desired setpoint set, and so the signal therefore represents the setpoint value here.

The sensor device 4 comprises at least a light source 41 and a light sensor 42. The light source 41 in this case transmits a light signal to the coded structure 34 on the measuring disc 31 or to the coded structure 134 on the setting disc 32, and the light sensor 42 detects the light reflected by the coded structure 34, 134.

Two sensor devices 4 arranged one behind another are typically provided for a coded structure 34, 134 in digital form. Here the two sensor devices 4 lying at the same radial distance, have an angular distance from one another which is greater than or less than the distance from one digital point to a next digital point of the coded structure. This permits the pivoting direction of the measuring disc 31 and/or the setting disc 32 to be recognized.

In the present exemplary embodiment, the sensor device 4 is integrated in the input device 6. The input device 6 is to be clipped onto the bead of the lid handle by the latching element 63, and can be rotated relative to the lid handle 2. It follows that the input device 6 can be connected to the lid handle 2 in a coupling fashion. This permits a flexible use of a number of lids 1 provided with a setting disc 31, measuring disc 32 and adjusting element 36. The sensor device 4 is therefore arranged in such a way that during the setting operation described below said sensor device can be moved relative both to the setting disc 32 and to the measuring disc 31. By contrast, during the measuring operation only the measuring disc 31 is moved, specifically relative to the setting disc 32 and also to the sensor device 4. Because of its configuration, the sensor device 4 can detect the path covered by the measuring disc 31, which represents an operating state, and output an appropriate signal.

The sensor device 4 therefore has to detect two movements. These are the first movement of the input device 6 relative to the setting disc 32, and the second movement of the measuring disc 31 relative to the input device 6. The sensor device 4 therefore comprises a first sensor for detecting the first movement, also denoted as setting sensor, and a second sensor for detecting the second movement, also denoted as measuring sensor.

The input device 6 is therefore arranged such that it can be pivoted or rotated over the setting disc 32 and the measuring disc 31. In the exemplary embodiment illustrated, the pivoting of the input device 6 serves for determining the initial operating state and for setting the setpoint of the desired operating state, that is to say a specific cooking temperature for example. This purpose is served by an indicator 60 which is pivoted along a scale 51 as far as the desired setpoint printed on the display disc 5. The interaction of the input device 6 with the setting disc 32 and the measuring disc 31 is described in more detail with the aid of Figures 5 and 6.

In addition the input device comprises two optional keys 61 and an optional display panel 62. The display panel 62 can serve for displaying operating states, or displaying predefined parameters such as cooking temperatures for specific foodstuffs. Furthermore the input device 6 comprises a signal transmitter, a storage means and a control means. The control means is connected in this case to the storage means and/or the sensor device. An application-specific integrated circuit (ASIC), for example, can be used as control means. The signal transmitter can output an operating state signal such as an acoustic signal or an optical signal, for example, which can be recognized by the user. If an acoustic signal is to be output, the signal transmitter is a buzzer. An optical signal can be output either via the display or via a separate light emitting diode or another display means. The storage means serve for storing the predefined parameters and for storing the required control code for the input device 6.

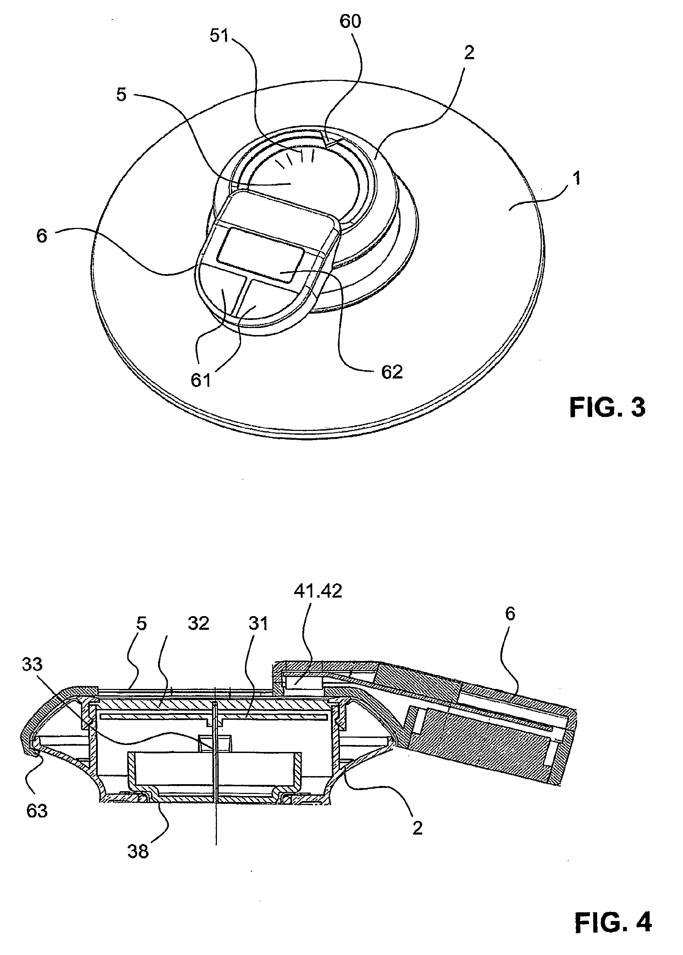

The operating state display apparatus can be integrated in a lid handle 2, as shown in Figures 1 to 4. In this case, the input device 6 can be pivoted about the central spindle of the handle. The input device 6 according to Figures 1 and 2 is arranged perpendicular to the central spindle of the handle. The input device 6 shown in Figures 3 and 4 is arranged at an angle to the central spindle of the handle. If the input device 6 does not comprise the display panel and the input keys, it can also be of a much smaller configuration. For example, it is conceivable for the input device to have the form of a ring which can be rotated about the operating state display apparatus.

Such an autonomous operating state display apparatus can be used with many different cooking vessels. If no mechanical means 63 are set, the apparatus can, for example, have for this purpose magnets with the aid of which the apparatus 6 can be connected to the cooking vessel. If the cooking vessel is made from a non-magnetic material, the operating state display apparatus can also be laid onto the cooking vessel in a lid trough.

In a further embodiment (not shown), the operating state display apparatus can also be integrated in the lid 2.

Figures 5 and 6 show diagrammatically the arrangement of the coded structure 34 on the measuring disc 31 and, respectively, of the coded structure 134 on the setting disc 32. The coded structure 34, 134 can be configured in the most varied ways. The sole criterion is that pivoting of the measuring disc 31 and/or setting disc 32 provides a variable which can be evaluated by the sensor device 2. In this case, the coded structure 34, 134 must extend over the entire pivoting range. The pivoting range preferably corresponds to the maximum measuring path of the adjusting elements which detect and/or measure the operating state.

In Figures 5 and 6, the coded structure 34, 134 is illustrated as points 35 arranged at uniform spacings on a circular ring. As soon as the light beam of the light source of a sensor device 4, 4' 4" strikes a point, there is a change in the intensity of the light beam reflected by the coded structure 34, 134. Such a change can be detected by the sensor. The number of the changes can be used by the control to count the points which have passed. In this case, the points are arranged at uniform spacings such that a distance from one point to a next point corresponds to a defined operating state change, for example a defined temperature change. Depending on the requirement, the spacings can be split up more finely, that is with a higher resolution. A further possibility for a coded structure 34, 134 would be, for example, the arrangement of different strips extending radially. A further alternative possibility would be, for example, to provide an opening in the setting disc 32 or in the measuring disc 31. It would then likewise be possible to detect such an opening by a said sensor. In the case of the use of points or lines or openings, it is also possible to speak of a digital measurement.

In other words it is also possible to say that the coded structure 34, 134 is split up into individual increments, and that these increments, or the spacing between the increments, corresponds to a defined change in an operating state.

Furthermore, it would also be possible for the coded structure to be a coloured circular segment extending over the entire pivoting range, the intensity of the colouring of the circular segment varying over the entire circular segment so as to produce a different reflection of the light beam at each position. An analogue measurement is also spoken of in this case.

Further patterns having an analogue or digital structure are also conceivable. For the purpose of explanation, the points 35 are displayed in different colours. In Figure 7, the points 34 of the inner circle and 134 of the outer circle are virtually unrecognizable, since they have a colour similar to the colour of the disc, but a different reflectivity.

Further possibilities for measuring a path with the aid of a sensor are likewise possible. For example, the measuring disc could be arranged in angular fashion such that the distance between the sensor and measuring disc changes in the event of pivoting. A capacitive or inductive proximity sensor is preferably used here.

In a first step, the user sets the setpoint of the operating state which is to be reached, in Figure 5 a temperature of 50°C, for example. Here the input device 6 is clipped onto the lid handle 2. The input device 6 is then pivoted in such a way that the sensor device 4, here the measuring sensor 4' and the setting sensor 4", comes to lie on a region in which no coded structure is present. This region is provided in Figure 5 with the reference numeral 39. The diagrammatically illustrated input device 6 adopts the position S1 in this initial position. The indicator 60 is likewise illustrated diagrammatically. In the second step, the input device 6 is, as already described above, pivoted relative to the setting disc 32, but also relative to the measuring disc 31 as far as the desired position of the setpoint. The user can read off the desired setpoint by means of the indicator 60 and the scale 51. In the exemplary embodiment shown, the setpoint is to be 50°C. Thus, the user pivots the input device 6 from the initial position S1 into the position S2. This is illustrated by an arrow 100. This pivoting sets the desired setpoint, and the currently prevailing actual value is recorded. As soon as the two sensors, 4', 4" reach the coded structure 34, the sensors 4', 4" output a signal, and the path covered can be detected. The zero point of the setting disc 32 is defined by the first measuring point 35 at the start or at the end of the setting scale. As soon as the actual value of the temperature has risen, that is to say to 40°C, for example, the measuring disc 31 with the coded structure 34 is pivoted relative to the setting disc 32 with the coded structure 134. The amount of this pivoting can be detected relatively by the two sensors 4' and 4" and the movement of the input device 6. Before measurement begins, the system can evaluate the gradient of the temperature rise and determine possible errors in the event of an excessively quick or excessively slow rise. The measurement begins as soon as the setting sensor 4" detects the coded structure 134 for the first time and outputs a first signal. Because of the pivoting of the measuring disc 31 relative to the setting disc 32, the measuring sensor 4' still cannot output a signal, since said measuring sensor is still not located over the coded structure 34. The pivoting path through the input device 6 is detected by the setting sensor 4". As soon as the measuring sensor 4' reaches the coded structure 34, the measuring sensor 4' can likewise output a first signal. The pivoting path which has been covered between the first signal output of the setting sensor 4' and the first signal output of the measuring sensor 4' represents the actual value of the operating state.

As soon as the input device 6 pivoted by the user has reached the desired position, that is to say the desired setpoint, the input device is not further pivoted. This position is illustrated in Figure 5 with the aid of the position S2, also termed setpoint position. In the position S2 the setpoint is specified on the scale with 50°C, something which is indicated thus by the indicator 60, which is part of the input device 6. As already mentioned, the pivoting path covered by the input device 6 over the coded structure 134 represents the desired setpoint. The pivoting path covered is detetcted by the sensor 4" which detects the number of increments of the coded structure 134 that have been covered. In the example shown, the input device 6 passes three measuring points 35. The setpoint resulting therefrom can in this case be stored by the control.

In an alternative embodiment, however, the setpoint can also be input via the two keys 61 of the input device 6. In the case of such an input, there is no pressing need to pivot the input device over the setting disc 32.

A change in the operating state results via the adjusting element in a pivoting of the measuring disc 31. This means, for example, that the cooking vessel located on a cooker is being heated by the hotplate. This causes the adjusting element 36 made from bimetal to begin deforming. This deformation results in a pivoting of the measuring disc 31. This pivoting can be detected by the measuring sensor 4". Depending on the configuration of the display means, the current operating state is displayed by the openings 52 - 55 in the display disc and by the display line 55 arranged on the measuring disc, or the operating state is displayed via the display panel. In a further embodiment, it is likewise possible to conceive a combination of displaying by means of the display disc and the display panel. As soon as the previously set operating state is reached, the operating state display apparatus advantageously outputs the acoustic or optical signal.

If, for example, the temperature is said operating state, the user can adjust the power of the cooker after the operating state is reached such that the desired operating state is maintained.

The control device can, moreover, be programmed in such a way that when the setpoint of the operating state is reached a first operating state signal is output. If the value of the operating state, for example in the case of a temperature rise, continues to rise, a further signal can be output when a limiting value defined in the control is exceeded. The limiting value is defined here as the setpoint plus and/or minus a specific amount. For example 80°C plus/minus 10°C. Here, a signal would therefore be output when 70°C was reached and/or at 90°C. The limiting values can also be denoted as lower limiting values, here 70°C, or as upper limiting value, here 90°C. However, this amount can also be such that when the setpoint is exceeded a relatively large or a relatively small amount is permitted, and upon the value falls below the setpoint a relatively small or relatively large amount is permitted. For example, 80°C plus 15°C/minus 10°C or 80°C plus 10°C/minus 15°C. In this case, an appropriate signal can be output both in the case of a temperature rise (for example, from 65°C to 75°C), and in the case of a temperature drop (for example from 75°C to 65°C). The signals for the temperature rise and for the temperature drop are preferably different and can thus be recognized by the user.

Moreover, it is also possible to provide a programming which prescribes a specific temperature for specified food (for example 80°C) and defines the corresponding limiting values in accordance with the above description.

In a further exemplary embodiment, the control has an interface via which it is possible to communicate with the cooker control, which likewise has one such interface. Here, the cooker control can be operated as a function of the current operating state. In this case, the control means comprises a transmitter with which a control signal can be generated. This control signal is transmitted in wireless fashion to a receiver of a heating apparatus acting on the cooking vessel, for example the cooker control. Wireless transmission methods include known cable-free methods, for example via infrared, Bluetooth or other radio links.

In a further exemplary embodiment, the control is, additionally, configured in such a way that these errors can be recognized in the cooker control. An error is defined as an implausible alteration in the operating state over a specific time period. It is, for example, implausible not to reach the first operating state in a predetermined time. If the operating state is a temperature, the predetermined time is a function, for example, of the food, of the type of cooking range and the type and/or size of the vessel. Such an error could, for example, be a failure of the heating elements. Further states to be detected could, given correct setting, be the wrong power of the hotplate or the wrong cooker setting. When cooking is done with little water, the absence of water results in a slowed down temperature rise.

### List or reference numerals

- 1: Lid
- 2: Lid handle
- 3: Measuring device
- 4: Sensor device
- 5: Display, display device
- 6: Input device
- 31: Measuring disc
- 32: Setting disc
- 33: Spindle
- 34, 134: Coded structure; coded surface
- 35: Measuring points, digital coded structure
- 36: Adjusting elements
- 37: Lid space
- 38: Bore
- 39: Region without coded surface
- 41: Light source
- 42: Light sensor
- 4': Measuring sensor
- 4": Setting sensor
- 51: Scale
- 52 - 55: Openings
- 56: Display line
- 60: Indicator
- 61: Keys
- 62: Display panel
- 63: Latching element

## Claims

1. Apparatus for determining and displaying or monitoring at least one operating state for a cooking vessel, selected from the group of temperature (T), pressure (P), or air humidity (H) of a cooking vessel, the apparatus comprising an adjusting element (3) for detecting the operating state, a control means and a signalling apparatus which comprises an acoustic signal transmitter and/or an optical signal transmitter and/or a display device by means of which display device it is possible to display an actual value of the operating state, and with the aid of which control means it is possible to output an appropriate signal when a setpoint of the operating state is reached, wherein the adjusting element (3) comprises a pivotable measuring disc (31) with a coded structure (34), wherein a sensor device (4, 4') is provided for sensing the pivoting path of the measuring disc (31), **characterized in that** the apparatus comprises a setting disc (32) with a coded structure (134), and a sensor device (4, 4") for sensing the setting of the setpoint of the operating state, the sensor device (4, 4") and the setting disc (32) being moveable relative to one another, and the measuring disc (31) and setting disc (32) being moveable relative to one another.

2. Apparatus according to claim 1, **characterized in that** the coded structure (34, 134) has an analogue structure or a digital structure, making it possible to sense these structures by means of the sensor device (4, 4', 4").

3. Apparatus according to Claim 1 or 2, **characterized in that** the apparatus can be combined with a lid (2) of the cooking vessel, the adjusting element (3) projecting into the lid space (37) through an opening (38) in the lid.

4. Apparatus according to Claim 3, **characterized in that** the opening (38) is of circular configuration and has a diameter in the range from 5 mm to 50 mm.

5. Apparatus according to one of the preceding claims, **characterized in that** the apparatus further comprises an input device (6) these input device (6) being permanently connected to the sensor device (4, 4', 4").

6. Apparatus according to Claim 5, **characterized in that** the input device can be connected via the measuring disc (31) and the setting disc (32) such that it can be coupled to the lid handle (2).

7. Apparatus according to Claim 5, **characterized in that** the input device can be connected permanently to the lid handle (2) via the measuring disc (31) and the setting disc (32).

8. Apparatus according to one of Claims 5 to 7, **characterized in that** the input device (6) comprises at least an input key (61) and a display panel (62).

9. Apparatus according to one of Claims 1 to 8, **characterized in that** the control means comprises a transmitter with the aid of which it is possible to generate a control signal which can be transmitted in a wireless fashion to a receiver of a heating apparatus acting on the cooking vessel.

10. Method for monitoring at least one operating state, selected from the group of temperature, pressure or air humidity, using an apparatus according to any one of claims 1 to 9, wherein the control means of the apparatus being used in a first step to monitor a setpoint of the operating state which is to be reached, and the signalling apparatus outputting an appropriate signal when the setpoint is reached, wherein in a second step following the first step an upper limiting value and/or a lower limiting value are/is monitored by the control means and the signalling apparatus outputs a further signal upon exceeding the upper limiting value and/or upon falling below the lower limiting value, **characterized in that** for setting the setpoint of the operating state the sensor device of the apparatus for sensing the setting of the setpoint of the operating state is applied on the apparatus outside the coded structures of the setting disc, and **in that** the sensor device and the setting disc are moved relative to one another until said setpoint is reached.

## Patentansprüche

1. Gerät zur Bestimmung und Darstellung oder Überwachung zumindest eines Betriebszustandes eines Kochgefässes, ausgewählt aus der Gruppe von Temperatur (T), Druck (P), oder Luftfeuchtigkeit (H) eines Kochgefässes, wobei die Vorrichtung ein Verstellelement (3) zur Erkennung des Betriebszustandes, ein Steuermittel und ein Signalisiergerät aufweist, wobei das Signalisiergerät einen akustischen Signalgeber und/oder einen optischen Signalgeber und/oder eine Anzeigevorrichtung aufweist, wobei es mit der Anzeigevorrichtung möglich ist, einen Ist-Wert des Betriebszustandes anzuzeigen, und es mit der Hilfe des Steuermittels möglich ist, ein geeignetes Signal auszugeben, wenn ein Sollwert des Betriebszustandes erreicht ist, wobei das Verstellelement (3) eine schwenkbare Messscheibe (31) mit einer codierten Struktur (34) aufweist, wobei eine Sensorvorrichtung (4, 4') zur Erfassung des Schwenkweges der Messscheibe (31) vorgesehen ist, **dadurch gekennzeichnet, dass** das Gerät eine Einstellscheibe (32) mit einer codierten Struktur (134), und eine Sensorvorrichtung (4, 4") zur Erfassung der Einstellung des Ist-Wertes des Betriebszustandes aufweist, wobei die Sensorvorrichtung (4, 4") und die Einstellscheibe (32) relativ zueinander bewegbar sind, und die Messscheibe (31) und die Einstellscheibe (32) relativ zueinander bewegbar sind.

2. Gerät gemäss Anspruch 1, **dadurch gekennzeichnet, dass** die codierten Strukturen (34, 134) eine analoge oder eine digitale Struktur haben, welche es ermöglicht, diese Strukturen mittels der Sensorvorrichtung (4, 4', 4") zu erfassen.

3. Gerät gemäss Anspruch 1 oder 2, **dadurch gekennzeichnet, dass** das Gerät mit einem Deckel (2) des Kochgefässes kombiniert werden kann, wobei das Verstellelement (3) durch eine Öffnung (38) im Deckel in den Deckelraum (37) hineinragt.

4. Gerät gemäss Anspruch 3, **dadurch gekennzeichnet, dass** die Öffnung (38) eine kreisförmige Konfiguration aufweist und einen Durchmesser im Bereich von 5 mm bis 50 mm hat.

5. Gerät gemäss einem der vorangehenden Ansprüche, **dadurch gekennzeichnet, dass** das Gerät im Weiteren eine Eingabevorrichtung (6) aufweist, wobei die Eingabevorrichtung (6) dauernd mit der Sensorvorrichtung (4, 4', 4") verbunden ist.

6. Gerät gemäss Anspruch 5, **dadurch gekennzeichnet, dass** die Eingabevorrichtung so durch die Messscheibe (31) und die Einstellscheibe (32) verbunden ist, dass sie mit dem Deckelgriff (2) gekoppelt werden kann.

7. Gerät gemäss Anspruch 5, **dadurch gekennzeichnet, dass** die Eingabevorrichtung dauernd mit dem Deckelgriff (2) durch die Messscheibe (31) und die Einstellscheibe (32) verbunden sein kann.

8. Gerät gemäss einem der Ansprüche 5 bis 7, **dadurch gekennzeichnet, dass** die Eingabevorrichtung (6) mindestens einen Eingabeschlüssel (61) und eine Anzeigetafel (62) aufweist.

9. Gerät gemäss einem der Ansprüche 1 bis 8, **dadurch gekennzeichnet, dass** das Steuermittel einen Sender aufweist, mit dessen Hilfe es möglich ist, ein Steuersignal zu erzeugen, welches in einer drahtlosen Weise zu einem Empfänger eines Heizgeräts übermittelt werden kann, welches auf das Kochgefäss einwirkt.

10. Verfahren zur Überwachung mindestens eines Betriebszustandes, ausgewählt aus der Gruppe von Temperatur, Druck, oder Luftfeuchtigkeit, mit der Verwendung eines Geräts gemäss einem der Ansprüche 1 bis 9, wobei das Steuermittel des Geräts in einem ersten Schritt zur Überwachung eines zu erreichenden Ist-Wertes des Betriebszustandes genutzt wird, und das Signalisiergerät ein geeignetes Signal ausgibt, wenn der Ist-Wert erreicht ist, wobei in einem zweiten Schritt, welcher dem ersten Schritt folgt, ein oberer begrenzender Wert und/oder ein unterer begrenzender Wert vom Steuermittel überwacht werden/wird und das Signalisiergerät ein weiteres Signal beim Überschreiten des oberen begrenzend Wertes und/oder beim Unterschreiten des unteren begrenzenden Wertes ausgibt, **dadurch gekennzeichnet, dass** für das Einstellen des Sollwertes des Betriebszustandes, die Sensorvorrichtung des Geräts zur Erfassung der Einstellung des Sollwertes des Betriebszustandes auf dem Gerät ausserhalb der codierten Struktur der Einstellscheibe angebracht wird, und dadurch dass die Sensorvorrichtung und die Einstellscheibe relativ zueinander bewegt werden, bis der besagte Sollwert erreicht ist.

## Revendications

1. Un appareil pour déterminer et visualiser ou surveiller au moins un état de fonctionnement d'un récipient de cuisson, sélectionné du groupe comprenant la température (T), la pression (P) ou l'humidité de l'air (H) d'un récipient de cuisson, l'appareil comprenant un élément d'ajustement (3) pour détecter l'état de fonctionnement, un moyen de contrôle et un appareil de signalisation qui comprend un émetteur de signal acoustique et/ou un émetteur de signal optique et/ou un dispositif 'de visualisation au moyen duquel il est possible d'afficher une valeur réelle de l'état de fonctionnement, et à l'aide du moyen de contrôle il est possible d'émettre un signal approprié lorsqu'un point de consigne de l'état de fonctionnement est atteint, où l'élément d'ajustement (3) comprend un disque de mesure pivotable (31) à structure codée (34), où le dispositif de détection (4, 4') est prévu pour détecter le trajet de pivotement du disque de mesure (31), **caractérisé en ce que** l'appareil comprend un disque de réglage (32) à structure codée (134), et un dispositif de détection (4, 4") pour détecter l'établissement du point de consigne de l'état de fonctionnement, le dispositif de détection (4, 4") et le disque de réglage (32) étant déplaçables relativement l'un à l'autre, et le disque de mesure (31) et le disque de réglage (32) étant déplaçables relativement l'un à l'autre.

2. L'appareil selon la revendication 1, **caractérisé en ce que** la structure codée (34, 134) a une structure analogique ou une structure numérique, qui permet de détecter ces structures au moyen du dispositif de détection (4, 4', 4").

3. L'appareil selon la revendication 1 ou 2, **caractérisé en ce que** l'appareil peut être combiné avec un couvercle (2) du récipient de cuisson, l'élément d'ajustement (3) se projetant dans l'espace du couvercle (37) par un orifice (38) du couvercle.

4. L'appareil selon la revendication 3, **caractérisé en ce que** l'orifice (38) a une configuration circulaire et a un diamètre de 5 mm à 50 mm.

5. L'appareil selon l'une quelconque des revendications précédentes, **caractérisé en ce que** l'appareil comprend aussi un dispositif d'entrée (6) qui est connecté en permanence au dispositif de détection (4, 4', 4").

6. L'appareil selon la revendication 5, **caractérisé en ce que** le dispositif d'entrée peut être connecté par l'intermédiaire du disque de mesure (31) et du disque de réglage (32) de façon à être couplé à la poignée du couvercle (2).

7. L'appareil selon la revendication 5, **caractérisé en ce que** le dispositif d'entrée peut être connecté en permanence à la poignée du couvercle (2) par l'intermédiaire du disque de mesure (31) et du disque de réglage (32).

8. L'appareil selon l'une quelconque des revendications 5 à 7, **caractérisé en ce que** le dispositif d'entrée (6) comprend au moins une touche d'entrée (61) et un panneau d'affichage (62).

9. L'appareil selon l'une quelconque des revendications 1 à 8, **caractérisé en ce que** le moyen de contrôle comprend un émetteur à l'aide duquel il est possible de générer un signal de contrôle qui peut être transmis en mode sans fil vers un récepteur d'un appareil de chauffage agissant sur le récipient de cuisson.

10. Un procédé de surveillance d'au moins un état de fonctionnement, sélectionné du groupe comprenant la température, la pression ou l'humidité de l'air, le moyen de contrôle étant utilisé dans une première étape pour surveiller un point de consigne de l'état de fonctionnement à atteindre, et l'appareil de signalisation émettant un signal approprié lorsque le point de consigne est atteint, où, dans une deuxième étape, suivant la première étape, une valeur limite supérieure et/ou une valeur limite inferieure est surveillée par le moyen de contrôle et l'appareil de signalisation émet un autre signal quand en dessus de la valeur limite supérieure et/ou en dessous de la valeur limite inférieure, **caractérisé en ce que** pour établir le point de consigne de l'état de fonctionnement, le dispositif de détection de l'appareil pour détecter l'établissement du point de consigne de l'état de fonctionnement est appliqué sur l'appareil en dehors des structures codées du disque de réglage, et **en ce que** le dispositif de détection et le disque de réglage sont déplacés relativement l'un à l'autre jusqu'à ce que le point de consigne est atteint.
